(19) Europäisches Patentamt / European Patent Office / Office européen des brevets

(11) **EP 3 554 149 B1**

(12) **EUROPEAN PATENT SPECIFICATION**

(45) Date of publication and mention
of the grant of the patent:
**25.11.2020 Bulletin 2020/48**

(51) Int Cl.:
**H04W 52/14** *(2009.01)*  **H04W 52/24** *(2009.01)*
**H04W 52/36** *(2009.01)*  **H04W 52/22** *(2009.01)*

(21) Application number: **16924037.1**

(22) Date of filing: **13.12.2016**

(86) International application number:
**PCT/CN2016/109652**

(87) International publication number:
**WO 2018/107358 (21.06.2018 Gazette 2018/25)**

(54) **UPLINK POWER CONTROL METHOD AND DEVICE**

UPLINK-LEISTUNG-STEUERUNGSVERFAHREN UND -VORRICHTUNG

PROCÉDÉ ET DISPOSITIF DE COMMANDE DE PUISSANCE DE LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.10.2019 Bulletin 2019/42**

(73) Proprietor: **GUANGDONG OPPO MOBILE
TELECOMMUNICATIONS
CORP., LTD.
Wusha, Chang'an
Dongguan,
Guangdong 523860 (CN)**

(72) Inventors:
• **LIN, Yanan
Dongguan
Guangdong 523860 (CN)**
• **XU, Hua
Ottawa, Ontario K2M 1N6 (CA)**

(74) Representative: **Manitz Finsterwald
Patent- und Rechtsanwaltspartnerschaft mbB
Martin-Greif-Strasse 1
80336 München (DE)**

(56) References cited:
EP-A1- 2 741 550        WO-A2-2010/005236
CN-A- 102 014 468      CN-A- 102 239 733
CN-A- 103 312 484      US-A1- 2010 142 455
US-A1- 2015 018 030

## Description

### TECHNICAL FIELD

Embodiments of the present application relate to the field of communications and, in particular, to method and device for controlling uplink power. The features of the preambles of the independent claims are known from US 2010/142455 A1.

### BACKGROUND

Uplink transmitting power in a Long Term Evolution ("LTE" for short) system is determined by a terminal device according to a power control parameter configured on the network side and downlink path loss measured by the terminal device. In uplink transmission of a future wireless communication system, a plurality of uplink multiple access modes will be introduced, and the method for controlling uplink power performed in related prior arts cannot meet requirements from different uplink multiple access modes. It is therefore desirable to provide a method for controlling uplink power in a communication system capable of supporting the plurality of uplink multiple access modes.

### SUMMARY

The present invention is defined in the independent claims. Any embodiment in this description that does not fall within the scope of protection defined in the claims shall be regarded as an example for understanding the present invention. The present application provides a method and device for controlling uplink power, which can flexibly adjust the uplink transmitting power, and meet requirements from different uplink multiple access modes, and are applicable to a communication system supporting a plurality of uplink multiple access modes.

In a first aspect, a method for controlling uplink power is provided, including: receiving, by a terminal device, uplink power control information transmitted by a network device; determining, by the terminal device, according to the uplink power control information, a target power control parameter corresponding to a target uplink multiple access mode; and determining, by the terminal device, according to the target power control parameter, a target transmitting power when transmitting a target uplink signal using the target uplink multiple access mode.

In the method for controlling uplink power of the present application, a terminal device determines, according to received uplink power control information transmitted by a network device, a target power control parameter corresponding to a target uplink multiple access mode. Therefore, when the terminal device uses different uplink multiple access modes for performing uplink signal transmission, an independent uplink power control process may be used to determine uplink transmitting power corresponding to the uplink multiple access mode. The uplink transmitting power can be flexibly adjusted to meet requirements from different uplink multiple access modes. The method is applicable to a communication system supporting a plurality of uplink multiple access modes.

In conjunction with the first aspect, in an implementation of the first aspect, the target uplink multiple access mode is one of a plurality of uplink multiple access modes.

In conjunction with the first aspect and its implementations described above, in another implementation of the first aspect, the target uplink multiple access mode is one of a plurality of candidate uplink multiple access modes in which the terminal device transmits the target uplink signal; or the target uplink multiple access mode is an uplink multiple access mode needing to be used by the terminal device to transmit the target uplink signal.

In conjunction with the first aspect and its implementations described above, in another implementation of the first aspect, the uplink power control information includes open loop power control information, the open loop power control information includes open loop power control parameters corresponding to a plurality of uplink multiple access modes, and the plurality of uplink multiple access modes includes the target uplink multiple access mode;
where the determining, by the terminal device, according to the uplink power control information, a target power control parameter corresponding to a target uplink multiple access mode includes: determining, by the terminal device, according to the open loop power control information, a target open loop power control parameter corresponding to the target uplink multiple access mode in the open loop power control parameters.

In conjunction with the first aspect and its implementations described above, in another implementation of the first aspect, the receiving, by the terminal device, uplink power control information transmitted by the network device includes: receiving, by the terminal device, the open loop power control information that is transmitted by the network device through a radio resource control RRC message.

In conjunction with the first aspect and its implementations described above, in another implementation of the first aspect, the target open loop power control parameter includes at least one of the following parameters: an uplink target receiving power, a path loss factor, and a sounding reference signal SRS power adjustment value.

In conjunction with the first aspect and its implementations described above, in another implementation of the first aspect, the uplink power control information includes power adjustment indication information;
where the determining, by the terminal device, according to the uplink power control information, a target power control parameter corresponding to a target uplink multiple access mode of a plurality of uplink multiple access modes includes: determining, by the terminal device, according to the power adjustment indication information and a preset corresponding relationship, a target close loop power adjustment value corresponding to the target uplink multiple access mode, where the preset corresponding relationship is a corresponding relationship between the power adjustment indication information and a close loop power adjustment value.

In conjunction with the first aspect and its implementations described above, in another implementation of the first aspect, the determining, by the terminal device, according to the power adjustment indication information and a preset corresponding relationship, a target close loop power adjustment value corresponding to the target uplink multiple access mode includes: determining, by the terminal device, according to the target uplink multiple access mode, a target corresponding relationship from the preset corresponding relationship; and determining, by the terminal device, according to the power adjustment indication information and the target corresponding relationship, the target close loop power adjustment value.

In conjunction with the first aspect and its implementations described above, in another implementation of the first aspect, the receiving, by the terminal device, uplink power control information transmitted by a network device includes: receiving, by the terminal device, a downlink control signaling DCI transmitted by the network device, where the DCI includes the power adjustment indication information.

In conjunction with the first aspect and its implementations described above, in another implementation of the first aspect, the target close loop power adjustment value is an adjustment value of the target transmitting power relative to a first transmitting power, where the first transmitting power is a transmitting power that is used when the terminal device transmits an uplink signal having a same type as the target uplink signal at a previous time; or
the target close loop power adjustment value is an adjustment value of the target transmitting power relative to a second transmitting power, where the second transmitting power is a transmitting power that is used when the terminal device transmits an uplink signal having a same type as the target uplink signal using the target uplink multiple access mode at a previous time; or,
the target close loop power adjustment value is an adjustment value of the target transmitting power relative to a third transmitting power, where the third transmitting power is a transmitting power of an uplink signal that has a same type as the target uplink signal and is most recently determined by the terminal device; or,
the target close loop power adjustment value is an adjustment value of the target transmitting power relative to a fourth transmitting power, where the fourth transmitting power is a transmitting power of an uplink signal that is transmitted using the target uplink multiple access mode and has a same type as the target uplink signal and is most recently determined by the terminal device; or
the target close loop power adjustment value is an adjustment value of the target transmitting power relative to a fifth transmitting power, where the fifth transmitting power is a transmitting power of the target uplink signal that is determined by the terminal device according to an open loop power control parameter corresponding to the target uplink multiple access mode.

In conjunction with the first aspect and its implementations described above, in another implementation of the first aspect, the method further includes: transmitting, by the terminal device, the target uplink signal to the network device by using the target uplink multiple access mode and the target transmitting power.

In conjunction with the first aspect and its implementations described above, in another implementation of the first aspect, the target uplink signal is one of the following signals: a physical uplink shared channel PUSCH, a physical uplink control channel PUCCH, an SRS, and a demodulation reference signal DMRS.

In conjunction with the first aspect and its implementations described above, in another implementation of the first aspect, the target uplink multiple access mode is one of the following multiple access modes: Discrete Fourier Transform Spread Orthogonal Frequency Division Multiplexing DFT-S-OFDM, Cyclic Prefix Orthogonal Frequency Division Multiplexing CP-OFDM, Single-carrier Frequency Division Multiple Access SC-FDMA, and Orthogonal Frequency Division Multiple Access OFDMA.

In a second aspect, a method for controlling uplink power is provided, including: determining, by a network device, uplink power control information, where the uplink power control information is used by the terminal device to determine a target power control parameter corresponding to a target uplink multiple access mode, and determine, according to the target power control parameter, a target transmitting power when transmitting a target uplink signal using the target uplink multiple access mode; and transmitting, by the network device, the uplink power control information to the terminal device.

According to the method for controlling uplink power of the present application, a network device transmits uplink power control information to a terminal device so that the terminal device can determine, according to the received uplink power control information, a target power control parameter corresponding to a target uplink multiple access mode. Therefore, when the terminal device uses different multiple access modes for performing uplink signal transmission, an independent uplink power control process may be used to determine uplink transmitting power corresponding to the uplink multiple access mode. The uplink transmitting power can be flexibly adjusted to meet requirements from different uplink multiple access modes. The method is applicable to a communication system supporting a plurality of uplink multiple access modes.

In conjunction with the second aspect, in an implementation of the second aspect, the target uplink multiple access mode is one of a plurality of uplink multiple access modes.

In conjunction with the second aspect and its implementations described above, in another implementation of the second aspect, the target uplink multiple access mode is one of a plurality of candidate uplink multiple access modes in which the terminal device transmits the target uplink signal; or the target uplink multiple access mode is an uplink multiple access mode needing to be used by the terminal device to transmit the target uplink signal.

In conjunction with the second aspect and its implementations described above, in another implementation of the second aspect, the uplink power control information includes open loop power control information, the open loop power control information includes open loop power control parameters corresponding to a plurality of uplink multiple access modes, the plurality of uplink multiple access modes include the target uplink multiple access mode, and the open loop power control information is used by the terminal device to determine a target open loop power control parameter corresponding to the target uplink multiple access mode in the open loop power control parameters.

In conjunction with the second aspect and its implementations described above, in another implementation of the second aspect, the transmitting, by a network device, the uplink power control information to the terminal device includes: transmitting, by the network device, the open loop power control information to the terminal device through a radio resource control RRC message.

In conjunction with the second aspect and its implementations described above, in another implementation of the second aspect, the target open loop power control parameter includes at least one of the following parameters: an uplink target receiving power, a path loss factor, and a sounding reference signal SRS adjustment value.

In conjunction with the second aspect and its implementations described above, in another implementation of the second aspect, the uplink power control information includes power adjustment indication information, and the power adjustment indication information is used by the terminal device to determine, according to the power adjustment indication information and a preset corresponding relationship, a target close loop power adjustment value corresponding to the target uplink multiple access mode, where the preset corresponding relationship is a corresponding relationship between the power adjustment indication information and a close loop power adjustment value.

In conjunction with the second aspect and its implementations described above, in another implementation of the second aspect, the transmitting, by the network device, the uplink power control information to the terminal device includes: transmitting, by the network device, a downlink control signaling DCI to the terminal device, where the DCI includes the power adjustment indication information.

In conjunction with the second aspect and its implementations described above, in another implementation of the second aspect, the target close loop power adjustment value is an adjustment value of the target transmitting power relative to a first transmitting power, where the first transmitting power is a transmitting power that is used when the terminal device transmits an uplink signal having a same type as the target uplink signal at a previous time; or

the target close loop power adjustment value is an adjustment value of the target transmitting power relative to a second transmitting power, where the second transmitting power is a transmitting power that is used when the terminal device transmits an uplink signal having a same type as the target uplink signal using the target uplink multiple access mode at a previous time; or,

the target close loop power adjustment value is an adjustment value of the target transmitting power relative to a third transmitting power, where the third transmitting power is a transmitting power of an uplink signal that has a same type as the target uplink signal and is most recently determined by the terminal device; or,

the target close loop power adjustment value is an adjustment value of the target transmitting power relative to a fourth transmitting power, where the fourth transmitting power is a transmitting power of an uplink signal that is transmitted using the target uplink multiple access mode and has a same type as the target uplink signal and is most recently determined by the terminal device; or

the target close loop power adjustment value is an adjustment value of the target transmitting power relative to a fifth transmitting power, where the fifth transmitting power is a transmitting power of the target uplink signal that is determined by the terminal device according to an open loop power control parameter corresponding to the target uplink multiple access mode.

In conjunction with the second aspect and its implementations described above, in another implementation of the second aspect, the method further includes: receiving, by the network device, the target uplink signal that is transmitted by the terminal device using the target uplink multiple access mode and the target transmitting power.

In conjunction with the second aspect and its implementations described above, in another implementation of the second aspect, the target uplink signal is one of the following signals: a physical uplink shared channel PUSCH, a physical uplink control channel PUCCH, an SRS, and a demodulation reference signal DMRS.

In conjunction with the second aspect and its implementations described above, in another implementation of the second aspect, the target uplink multiple access mode is one of the following multiple access modes: Discrete Fourier Transform Spread Orthogonal Frequency Division Multiplexing DFT-S-OFDM, Cyclic Prefix Orthogonal Frequency Division Multiplexing CP-OFDM, Single-carrier Frequency Division Multiple Access SC-FDMA, and Orthogonal Frequency Division Multiple Access OFDMA.

In a third aspect, a terminal device is provided for performing the method in the first aspect described above or any possible implementation of the first aspect. In particular, the terminal device includes a functional module for performing the method in the first aspect described above or any possible implementation of the first aspect.

In a fourth aspect, a network device is provided for performing the method in the second aspect described above or any possible implementation of the second aspect. In particular, the terminal device includes a functional module for performing the method in the second aspect described above or any possible implementation of the second aspect.

In a fifth aspect, a terminal device is provided, including: a processor, a memory, and a transceiver. The processor, the memory, and the transceiver communicate with each other through an internal connection path, and transmit control and/or data signals, such that the terminal device performs the method in the first aspect described above or any possible implementation of the first aspect.

In a sixth aspect, a network device is provided, including: a processor, a memory, and a transceiver. The processor, the memory, and the transceiver communicate with each other through an internal connection path, and transmit control and/or data signals, such that the network device performs the method in the second aspect described above or any possible implementation of the second aspect.

In a seventh aspect, a computer readable medium is provided for storing a computer program, where the computer program includes instructions for performing the method in the first aspect described above or any possible implementation of the first aspect.

In an eighth aspect, a computer readable medium is provided for storing a computer program, where the computer program includes instructions for performing the method in the second aspect described above or any possible implementation of the second aspect.

## BRIEF DESCRIPTION OF DRAWINGS

FIG. 1 is a schematic flowchart of a method for controlling uplink power according to an embodiment of the present application;

FIG. 2 is another schematic flowchart of a method for controlling uplink power according to an embodiment of the present application;

FIG. 3 is a schematic flowchart of a method for controlling uplink power according to another embodiment of the present application;

FIG. 4 is another schematic flowchart of a method for controlling uplink power according to another embodiment of the present application;

FIG. 5 is a schematic block diagram of a terminal device according to an embodiment of the present application;

FIG. 6 is a schematic block diagram of a network device according to an embodiment of the present application;

FIG. 7 is a schematic block diagram of a terminal device according to another embodiment of the present application; and

FIG. 8 is a schematic block diagram of a network device according to another embodiment of the present application.

## DESCRIPTION OF EMBODIMENTS

Technical solutions in the embodiments of the present application will be described hereunder clearly and completely with reference to the accompanying drawings in the embodiments of the present application.

It should be understood that the technical solutions in the embodiments of the present application can be applied to various communication systems, For instance, a Global System of Mobile communication ("GSM" for short), a Code Division Multiple Access ("CDMA" for short) system, a Wideband Code Division Multiple Access ("WCDMA" for short) system, General Packet Radio Service ("GPRS" for short), a Long Term Evolution ("LTE" for short) system, an LTE Frequency Division Duplex ("FDD" for short) system, an LTE Time Division Duplex ("TDD" for short), a Universal Mobile Telecommunication System ("UMTS" for short), a Worldwide Interoperability for Microwave Access ("WiMAX" for short) communication system, a 5G system, or a New Radio (NR) system.

In the embodiments of the present application, the terminal device may include but not limited to a Mobile Station ("MS" for short), a Mobile Terminal, a Mobile Telephone, User Equipment (UE), a handset, a portable equipment, a vehicle, etc. The terminal device may communicate with one or more core networks via a Radio Access Network (RAN). For instance, the terminal device may be a mobile phone (or called as a "cellular" phone), a computer with wireless communication functions, etc., and the terminal device may also be a portable, pocket, handheld, computer-embedded or vehicle-mounted mobile apparatus.

In the embodiments of the present application, the network device is an apparatus deployed in the radio access network for providing the terminal device with the wireless communication functions. The network device may be a base station which may include various forms of macro base stations, micro base stations, relay stations, access points, etc. In systems with different radio access technologies, devices with base station functionalities may vary in terms of their names. For instance, a base station in an LTE network is called as an Evolved NodeB ("eNB" or "eNodeB" for short), and a base station in a 3rd Generation ("3G" for short) network is called as a Node B, and the like.

Uplink transmission in the LTE system only supports a Discrete Fourier Transform Spread Orthogonal Frequency Division Multiplexing ("DFT-S-OFDM" for short) multiple access mode, and only a set of uplink power control parameters needs to be configured on the network side for the uplink transmission, however, two uplink multiple access modes (or called as "uplink waveforms") are currently introduced in the uplink transmission in the present 5G system: a DFT-S-OFDM multiple access mode and a Cyclic Prefix ("CP" for short) -OFDM multiple access mode. The former can only be used for uplink single-layer transmission, and the latter can be used for uplink single-layer or multilayer transmission. Which multiple access mode the terminal device uses can be configured by the network side according to uplink channel quality of the terminal. Generally, the DFT-S-OFDM multiple access mode has better coverage performance in channel transmission, but has lower spectral efficiency. The CP-OFDM multiple access mode has higher spectral efficiency, but has poor coverage performance due to its high Peak to Average Power Ratio ("PAPR" for short). When the terminal device uses different multiple access modes to transmit uplink signals, the required uplink transmitting power is different due to different coverage range, the use of the method for controlling uplink power in the LTE system cannot meet requirements from different uplink multiple access modes.

Therefore, an embodiment of the present application provides a method for controlling uplink power so that the terminal device can calculate uplink transmitting power corresponding to each uplink multiple access mode by using an independent uplink power control process, which can flexibly adjust the uplink transmitting power and meet requirements from different uplink multiple access modes.

It should be noted that, in the embodiments of the present application, uplink transmission refers to a process in which a terminal device transmits a signal to a network device, and downlink transmission refers to a process in which the network device transmits a signal to the terminal device.

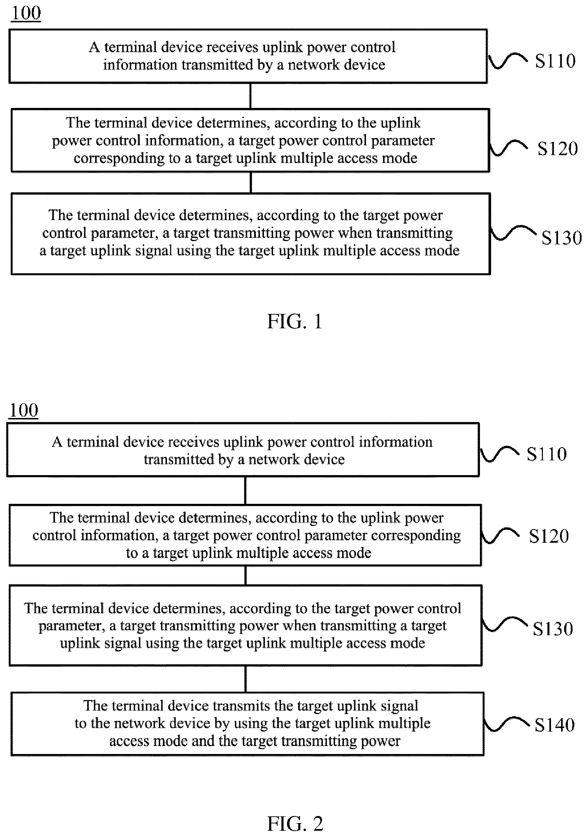

FIG. 1 shows a method for controlling uplink power according to an embodiment of the present application. As shown in FIG. 1, the method 100 includes:

S110, a terminal device receives uplink power control information transmitted by a network device;
S120, the terminal device determines, according to the uplink power control information, a target power control parameter corresponding to a target uplink multiple access mode; and
S130, the terminal device determines, according to the target power control parameter, a target transmitting power when transmitting a target uplink signal using the target uplink multiple access mode.

According to the method for controlling uplink power in the embodiment of the present application, a terminal device determines, according to received uplink power control information transmitted by a network device, a target power control parameter corresponding to a target uplink multiple access mode. Therefore, when the terminal device uses different uplink multiple access modes for performing uplink signal transmission, an independent uplink power control process may be used to determine uplink transmitting power corresponding to the uplink multiple access mode. The uplink transmitting power can be flexibly adjusted to meet requirements from different uplink multiple access modes. The method is applicable to a communication system supporting a plurality of uplink multiple access modes.

It should be noted that, after the terminal device determines, according to the target power control parameter, a target transmitting power when transmitting a target uplink signal using the target uplink multiple access mode, the target uplink signal may be transmitted at a current instance by using the target uplink multiple access mode and the target transmitting power or the target uplink signal may not be transmitted at a current instance by using the target uplink multiple access mode. When the terminal device does not use the target uplink multiple access mode to transmit the target uplink signal at the current instance, the terminal device may store the determined target transmitting power, and use this determined target transmitting power to transmit the target uplink signal when the target uplink signal is actually transmitted by using the target uplink multiple access mode in the future.

Moreover, the target uplink multiple access mode may be one of a plurality of candidate uplink multiple access modes that may be used by the terminal device to transmit the target uplink signal. In this case, the terminal device determines a power control parameter corresponding to each candidate uplink multiple access mode according to the uplink power control information transmitted by the network device. Alternatively, the target uplink multiple access mode is an uplink multiple access mode that needs to be used by the terminal device for transmitting the target uplink signal. In this case, the terminal device may determine the target uplink multiple access mode according to indication information of the multiple access mode configured on the network side. For instance, the target uplink multiple access mode may be explicitly indicated through signaling, such as a Radio Resource Control ("RRC" for short) message or Downlink Control Information ("DCI" for short). Alternatively, the target uplink multiple access mode may be implicitly indicated through other information, for instance, different DCI formats correspond to different uplink multiple access modes.

In an embodiment of the present application, the target uplink multiple access mode is one of a plurality of uplink multiple access modes. For instance, the target uplink multiple access mode is one the following multiple access modes: Discrete Fourier Transform Spread Orthogonal Frequency Division Multiplexing ("DFT-S-OFDM" for short), Cyclic Prefix ("CP" for short)-OFDM, Single-carrier Frequency Division Multiple Access ("SC-FDMA" for short), and Orthogonal Frequency Division Multiple Access ("OFDMA" for short).

In an embodiment of the present application, the uplink power control information includes open loop power control information, the open loop power control information includes open loop power control parameters corresponding to a plurality of uplink multiple access modes, and the plurality of uplink multiple access modes includes the target uplink multiple access mode. The terminal device determines, according to the open loop power control information, a target open loop power control parameter corresponding to the target uplink multiple access mode in the open loop power control parameters.

In an embodiment, as an example, the target open loop power control parameter includes at least one of the following parameters: an uplink target receiving power, a path loss factor, and a Sounding Reference Signal ("SRS" for short) power adjustment value.

In an embodiment, as an example, the terminal device receives the open loop power control information that is transmitted by the network device through an RRC message. The network device separately configures respective open loop power control parameters for different uplink multiple access modes through the open loop power control information.

Specifically, in some embodiments, the network device may configure a complete open loop power control parameter for an uplink multiple access mode, and configure, for other uplink multiple access modes, an offset value relative to the open loop power control parameter corresponding to this uplink multiple access mode. Therefore, overheads of downlink signaling can be saved. For instance, the network device configures uplink target receiving power corresponding to the DFT-S-OFDM as -60 dBm, and configures an offset value of uplink target receiving power corresponding to the CP-OFDM relative to the uplink target receiving power corresponding to the DFT-S-OFDM as 10 dBm.

Alternatively, in some embodiments, the network device configures a complete open loop power control parameter for each uplink multiple access mode. For instance, the network device configures the uplink target receiving power corresponding to the DFT-S-OFDM as -60 dBm and configures a path loss factor as 1, and configures the uplink target receiving power corresponding to the CP-OFDM as 20 dBm and configures a path loss factor as 2. When the terminal device determines to transmit a target uplink signal by using one of uplink multiple access modes, a transmitting power of the target uplink signal is calculated according to these open loop power control parameters corresponding to the determined uplink multiple access mode.

In an embodiment of the present application, the uplink power control information includes power adjustment indication information; the terminal device determines, according to the power adjustment indication information and a preset corresponding relationship, a target close loop power adjustment value corresponding to the target uplink multiple access mode, where the preset corresponding relationship is a corresponding relationship between the power adjustment indication information and a close loop power adjustment value.

In some embodiments, the terminal device receives a DCI transmitted by the network device, where the DCI includes the power adjustment indication information. Moreover, the DCI herein may be DCI for scheduling transmission of the target uplink signal, or DCI dedicated to carrying power adjustment indication information, at this point, the DCI is not used for scheduling transmission of the target uplink signal.

In an embodiment, as an example, the preset corresponding relationship described above may be pre-determined by the terminal device and the network device, or may be configured by the network device through the indication information for the terminal device. The preset corresponding relationship may be shown as Table 1. It should be noted that Table 1 only shows an example of a preset corresponding relationship, rather than limiting the preset corresponding relationship.

Table 1

| Value of indication field of power adjustment indication information in DCI | Close loop power adjustment value (in dB) |
|---|---|
| 00 | -1 |

(continued)

| Value of indication field of power adjustment indication information in DCI | Close loop power adjustment value (in dB) |
|---|---|
| 01 | 0 |
| 10 | 1 |
| 11 | 3 |

In an embodiment of the present application, for different uplink multiple access modes, close loop power adjustment values indicated in a same indication field in the power adjustment indication information may be different. Therefore, the terminal device needs to determine, from the preset corresponding relationship, a target corresponding relationship according to the target uplink multiple access mode, and then determine a target close loop power adjustment value according to the power adjustment information and the target corresponding relationship. For different uplink multiple access modes, the corresponding relationship between the power adjustment indication information and the close loop power adjustment values may be predetermined by the terminal device and the network device, or may be configured by the network device through the indication information for the terminal device. For instance, Table 2 shows another corresponding relationship between the power adjustment indication information and the close loop power adjustment value.

Table 2

| Value of indication field of power adjustment indication information in DCI | Close loop power adjustment value of DFT-S-OFDM (in dB) | Close loop power adjustment value of CP-OFDM (in dB) |
|---|---|---|
| 00 | -1 | -0.5 |
| 01 | 0 | 0 |
| 10 | 1 | 0.5 |
| 11 | 3 | 1.5 |

In an embodiment of the present application, the target close loop power adjustment value may be an absolute value adjusted based on the open loop power, or may be an accumulated value adjusted based on the previous transmitting power. The network device may configure through signaling for the terminal device whether the target close loop power adjustment value is the absolute value adjusted based on the open loop power or the accumulated value adjusted based on the previous transmitting power.

Specifically, in some embodiments, the target close loop power adjustment value is an adjustment value of the target transmitting power relative to a first transmitting power, where the first transmitting power is a transmitting power that is used when the terminal device transmits an uplink signal having a same type as the target uplink signal at a previous time. For instance, the target close loop power adjustment value may be an adjustment value of transmitting power in which the terminal device transmits a Physical Uplink Shared Channel ("PUSCH" for short) relative to transmitting power in which the terminal device transmits the PUSCH at a previous time.

Alternatively, the target close loop power adjustment value is an adjustment value of the target transmitting power relative to a second transmitting power, where the second transmitting power is a transmitting power that is used when the terminal device transmits an uplink signal having a same type as the target uplink signal using the target uplink multiple access mode at a previous time. For instance, the target close loop power adjustment value is an adjustment value of transmitting power in which the terminal device transmits a PUSCH by using DFT-S-OFDM relative to transmitting power in which the terminal device transmits the PUSCH by using the DFT-S-OFDM at a previous time.

Alternatively, the target close loop power adjustment value is an adjustment value of the target transmitting power relative to a third transmitting power, where the third transmitting power is a transmitting power of an uplink signal that has a same type as the target uplink signal and is most recently determined by the terminal device. For instance, the target close loop power adjustment value is an adjustment value of transmitting power in which the terminal device transmits a PUSCH relative to most recently calculated transmitting power of the PUSCH. This does not mean that the terminal device needs to actually transmit the PUSCH when updating the transmitting power, but the terminal device would store the most recently calculated transmitting power of the PUSCH for a subsequent transmission of the PUSCH.

Alternatively, the target close loop power adjustment value is an adjustment value of the target transmitting power relative to a fourth transmitting power, where the fourth transmitting power is a transmitting power of an uplink signal that is transmitted using the target uplink multiple access mode and has a same type as the target uplink signal and is most recently determined by the terminal device. For instance, the target power adjustment value is an adjustment value of transmitting power in which the terminal device transmits a PUSCH by using DFT-S-OFDM relative to transmitting power which is obtained through a most recent calculation (or a most recent update) and in which the PUSCH is transmitted using the DFT-S-OFDM. This does not mean that the terminal device herein needs to actually transmit the PUSCH when updating the transmitting power, but the terminal device would store the most recently calculated transmitting power of the PUSCH for a subsequent transmission of the PUSCH.

Alternatively, the target close loop power adjustment value is an adjustment value of the target transmitting power relative to a fifth transmitting power, where the fifth transmitting power is a transmitting power of the target uplink signal that is determined by the terminal device according to an open loop power control parameter corresponding to the target uplink multiple access mode. The open loop power control parameter herein may be a parameter configured by the network device through high layer signaling, such as the target receiving power and the path loss factor. The terminal device may calculate the transmitting power according to Formula (1) and the open loop power control parameter.

$$P_{\mathrm{PUSCH}}(i) = 10 \log_{10}(M_{\mathrm{PUSCH}}(i)) + P_{\mathrm{O\_PUSCH}}(j) + \alpha(j) \cdot PL + \Delta_{\mathrm{TF}}(i) \qquad (1)$$

Where $M_{\mathrm{PUSCH}}(i)$ is an uplink transmission bandwidth, $P_{0\_\mathrm{PUSCH}}(j)$ is target receiving power, $\alpha(j)$ is a path loss factor, PL is downlink path loss, $\Delta_{\mathrm{TF}}(i)$ is an adjustment value related to a Modulation and Coding Scheme ("MCS" for short).

In the above embodiment, the terminal device may determine, according to the open loop power control parameters respectively configured by the network device through high layer signaling for different uplink multiple access modes, a target open loop power control parameter corresponding to the target uplink multiple access mode, and determine, according to the power adjustment indication information carried by the network device through the DCI, a target close loop power adjustment value corresponding to the target uplink multiple access mode. Subsequently, the terminal device calculates the target transmitting power according to the target open loop power control parameter, the target close loop power adjustment value, and a preset transmitting power calculation method or formula.

Further, after the terminal device determines the target transmitting power, as shown in FIG. 2, the method 100 further includes:

S140, the terminal device transmits the target uplink signal to the network device by using the target uplink multiple access mode and the target transmitting power.

In all the embodiments described above, the target uplink signal is one of the following signals: a PUSCH, a Physical Uplink Control Channel ("PUCCH" for short), an SRS, and a Demodulation Reference Signal ("DMRS" for short).

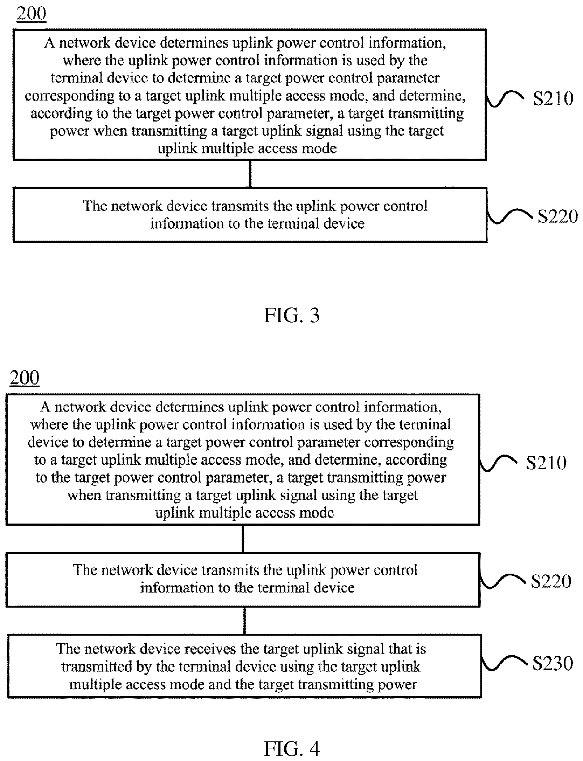

The method for controlling uplink power according to the embodiment of the present application is described above in detail from the terminal device side in conjunction with FIG. 1 and FIG. 2, and a method for controlling uplink power according to an embodiment of the present application will be described hereafter in detailed from the network device side in conjunction with FIG. 3 and FIG. 4. It should be understood that the interaction between the network device and the terminal device as described on the network device side is the same as that described on the terminal device side. To avoid redundancy, related descriptions are omitted as appropriate.

FIG. 3 is a method for controlling uplink power according to another embodiment of the present application. As shown in FIG. 3, the method 200 includes:

S210, a network device determines uplink power control information, where the uplink power control information is used by the terminal device to determine a target power control parameter corresponding to a target uplink multiple access mode, and determine, according to the target power control parameter, a target transmitting power when transmitting a target uplink signal using the target uplink multiple access mode; and

S220, the network device transmits the uplink power control information to the terminal device.

Therefore, according to the method for controlling uplink power in the embodiment of the present application, a network device transmits uplink power control information to a terminal device so that the terminal device can determine, according to the received uplink power control information, a target power control parameter corresponding to a target uplink multiple access mode. Therefore, when the terminal device uses different multiple access modes for performing uplink signal transmission, an independent uplink power control process may be used to determine uplink transmitting power corresponding to the uplink multiple access mode. The uplink transmitting power can be flexibly adjusted to meet requirements from different uplink multiple access modes. The method is applicable to a communication system supporting a plurality of uplink multiple access modes.

In an embodiment of the present application, the target uplink multiple access mode is one of a plurality of uplink multiple access modes.

In an embodiment of the present application, the target uplink multiple access mode is one of a plurality of candidate uplink multiple access modes in which the terminal device transmits the target uplink signal; or the target uplink multiple access mode is an uplink multiple access mode needing to be used by the terminal device to transmit the target uplink signal.

In an embodiment of the present application, the uplink power control information includes open loop power control information, the open loop power control information includes open loop power control parameters corresponding to a plurality of uplink multiple access modes, the plurality of uplink multiple access modes include the target uplink multiple access mode, and the open loop power control information is used by the terminal device to determine a target open loop power control parameter corresponding to the target uplink multiple access mode in the open loop power control parameters.

In an embodiment of the present application, S220 specifically includes: the network device transmits the open loop power control information to the terminal device through a radio resource control RRC message.

In an embodiment of the present application, the target open loop power control parameter includes at least one of the following parameters: an uplink target receiving power, a path loss factor, and a sounding reference signal SRS adjustment value.

In an embodiment of the present application, the uplink power control information includes power adjustment indication information, and the power adjustment indication information is used by the terminal device to determine, according to the power adjustment indication information and a preset corresponding relationship, a target close loop power adjustment value corresponding to the target uplink multiple access mode, where the preset corresponding relationship is a corresponding relationship between the power adjustment indication information and a close loop power adjustment value.

In an embodiment of the present application, S120 specifically includes: the network device transmits a downlink control signaling DCI to the terminal device, where the DCI includes the power adjustment indication information.

In an embodiment of the present application, the target close loop power adjustment value is an adjustment value of the target transmitting power relative to a first transmitting power, where the first transmitting power is a transmitting power that is used when the terminal device transmits an uplink signal having a same type as the target uplink signal at a previous time; or

the target close loop power adjustment value is an adjustment value of the target transmitting power relative to a second transmitting power, where the second transmitting power is a transmitting power that is used when the terminal device transmits an uplink signal having a same type as the target uplink signal using the target uplink multiple access mode at a previous time; or,

the target close loop power adjustment value is an adjustment value of the target transmitting power relative to a third transmitting power, where the third transmitting power is a transmitting power of an uplink signal that has a same type as the target uplink signal and is most recently determined by the terminal device; or,

the target close loop power adjustment value is an adjustment value of the target transmitting power relative to a fourth transmitting power, where the fourth transmitting power is a transmitting power of an uplink signal that is transmitted using the target uplink multiple access mode and has a same type as the target uplink signal and is most recently determined by the terminal device; or

the target close loop power adjustment value is an adjustment value of the target transmitting power relative to a fifth transmitting power, where the fifth transmitting power is a transmitting power of the target uplink signal that is determined by the terminal device according to an open loop power control parameter corresponding to the target uplink multiple access mode.

In an embodiment of the present application, as shown in FIG. 4, the method 200 further includes:

S230, the network device receives the target uplink signal that is transmitted by the terminal device using the target uplink multiple access mode and the target transmitting power.

In an embodiment of the present application, the target uplink signal is one of the following signals: a physical uplink shared channel PUSCH, a physical uplink control channel PUCCH, an SRS, and a demodulation reference signal DMRS.

In an embodiment of the present application, the target uplink multiple access mode is one of the following multiple access modes: Discrete Fourier Transform Spread Orthogonal Frequency Division Multiplexing DFT-S-OFDM, Cyclic Prefix Orthogonal Frequency Division Multiplexing CP-OFDM, Single-carrier Frequency Division Multiple Access SC-FDMA, and Orthogonal Frequency Division Multiple Access OFDMA.

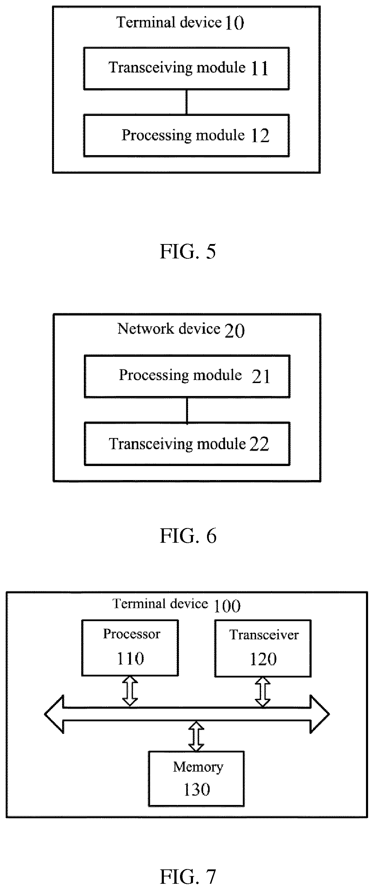

The method for controlling uplink power according to the embodiment of the present application is described in detail in conjunction with FIG. 1 to FIG. 4, and a terminal device according to an embodiment of the present application will be described hereafter in detail in conjunction with FIG. 5. As shown in FIG. 5 , the terminal device 10 includes:

a transceiving module 11, configured to receive uplink power control information transmitted by a network device; and

a processing module 12, configured to determine, according to the uplink power control information, a target power control parameter corresponding to a target uplink multiple access mode,

the processing module 12 is further configured to determine, according to the target power control parameter, a target transmitting power when transmitting a target uplink signal using the target uplink multiple access mode.

Hence, the terminal device according to the embodiment of the present application determines, according to received uplink power control information transmitted by a network device, a target power control parameter corresponding to a target uplink multiple access mode. Therefore, when the terminal device uses different uplink multiple access modes for performing uplink signal transmission, an independent uplink power control process may be used to determine uplink transmitting power corresponding to the uplink multiple access mode. The uplink transmitting power can be flexibly adjusted to meet requirements from different uplink multiple access modes. The terminal device is applicable to a communication system supporting a plurality of uplink multiple access modes.

In an embodiment of the present application, the target uplink multiple access mode is one of a plurality of uplink multiple access modes.

In an embodiment of the present application, the target uplink multiple access mode is one of a plurality of candidate uplink multiple access modes in which the terminal device transmits the target uplink signal; or the target uplink multiple access mode is an uplink multiple access mode to be used by the terminal device to transmit the target uplink signal.

In an embodiment of the present application, the uplink power control information includes open loop power control information, the open loop power control information includes open loop power control parameters corresponding to a plurality of uplink multiple access modes, and the plurality of uplink multiple access modes include the target uplink multiple access mode;

where the processing module 12 is specifically configured to determine, according to the open loop power control information, a target open loop power control parameter corresponding to the target uplink multiple access mode in the open loop power control parameters.

In an embodiment of the present application, the transceiving module 11 is specifically configured to receive the open loop power control information that is transmitted by the network device through a radio resource control RRC message.

In an embodiment of the present application, the target open loop power control parameter includes at least one of the following parameters: an uplink target receiving power, a path loss factor, and a sounding reference signal SRS power adjustment value.

In an embodiment of the present application, the uplink power control information includes power adjustment indication information;

where the processing module 12 is specifically configured to determine, according to the power adjustment indication information and a preset corresponding relationship, a target close loop power adjustment value corresponding to the target uplink multiple access mode, where the preset corresponding relationship is a corresponding relationship between the power adjustment indication information and a close loop power adjustment value.

In an embodiment of the present application, the processing module 12 is specifically configured to: determine, according to the target uplink multiple access mode, a target corresponding relationship from the preset corresponding relationship; and determine, according to the power adjustment indication information and the target corresponding relationship, the target close loop power adjustment value.

In an embodiment of the present application, the transceiving module 11 is specifically configured to receive a downlink control signaling DCI transmitted by the network device, where the DCI includes the power adjustment indication information.

In an embodiment of the present application, the target close loop power adjustment value is an adjustment value of the target transmitting power relative to a first transmitting power, where the first transmitting power is a transmitting power that is used when the terminal device transmits an uplink signal having a same type as the target uplink signal at a previous time; or

the target close loop power adjustment value is an adjustment value of the target transmitting power relative to a second transmitting power, where the second transmitting power is a transmitting power that is used when the terminal device transmits an uplink signal having a same type as the target uplink signal using the target uplink multiple access mode at a previous time; or,

the target close loop power adjustment value is an adjustment value of the target transmitting power relative to a third transmitting power, where the third transmitting power is a transmitting power of an uplink signal that has a same type as the target uplink signal and is most recently determined by the terminal device; or,

the target close loop power adjustment value is an adjustment value of the target transmitting power relative to a fourth transmitting power, where the fourth transmitting power is a transmitting power of an uplink signal that is transmitted using the target uplink multiple access mode and has a same type as the target uplink signal and is most recently determined by the terminal device; or

the target close loop power adjustment value is an adjustment value of the target transmitting power relative to a fifth transmitting power, where the fifth transmitting power is a transmitting power of the target uplink signal that is determined by the terminal device according to an open loop power control parameter corresponding to the target uplink multiple access mode.

In an embodiment of the present application, the transceiving module 11 is further configured to transmit the target uplink signal to the network device by using the target uplink multiple access mode and the target transmitting power.

In an embodiment of the present application, the target uplink signal is one of the following signals: a physical uplink shared channel PUSCH, a physical uplink control channel PUCCH, an SRS, and a demodulation reference signal DMRS.

In an embodiment of the present application, the target uplink multiple access mode is one of the following multiple access modes: Discrete Fourier Transform Spread Orthogonal Frequency Division Multiplexing DFT-S-OFDM, Cyclic Prefix Orthogonal Frequency Division Multiplexing CP-OFDM, Single-carrier Frequency Division Multiple Access SC-FDMA, and Orthogonal Frequency Division Multiple Access OFDMA.

The terminal device according to the embodiment of the present application may correspond to processes corresponding to the method 100 in the embodiment of the present application, and respective units/modules in the terminal device and other operations and/or functions as described above are respectively intend to implement corresponding processes in the method 100. For the sake of brevity, details will not be described herein again.

FIG. 6 shows a network device according to an embodiment of the present application. As shown in FIG. 6, the network device 20 includes:

> a processing module 21, configured to: determine uplink power control information, where the uplink power control information is used by the terminal device to determine a target power control parameter corresponding to a target uplink multiple access mode, and determine, according to the target power control parameter, a target transmitting power when transmitting a target uplink signal using the target uplink multiple access mode; and
> a transceiving module 22, configured to transmit the uplink power control information to the terminal device.

Hence, the network device according to the embodiment of the present application transmits uplink power control information to a terminal device so that the terminal device can determine, according to the received uplink power control information, a target power control parameter corresponding to a target uplink multiple access mode. Therefore, when the terminal device uses different multiple access modes for performing uplink signal transmission, an independent uplink power control process may be used to determine uplink transmitting power corresponding to the uplink multiple access mode. The uplink transmitting power can be flexibly adjusted to meet requirements from different uplink multiple access modes. The network device is applicable to a communication system supporting a plurality of uplink multiple access modes.

In an embodiment of the present application, the target uplink multiple access mode is one of a plurality of uplink multiple access modes.

In an embodiment of the present application, the target uplink multiple access mode is one of a plurality of candidate uplink multiple access modes in which the terminal device transmits the target uplink signal; or the target uplink multiple access mode is an uplink multiple access mode to be used by the terminal device to transmit the target uplink signal.

In an embodiment of the present application, the uplink power control information includes open loop power control information, the open loop power control information includes open loop power control parameters corresponding to a plurality of uplink multiple access modes, the plurality of uplink multiple access modes include the target uplink multiple access mode, and the open loop power control information is used by the terminal device to determine a target open loop power control parameter corresponding to the target uplink multiple access mode in the open loop power control parameters.

In an embodiment of the present application, the transceiving module 22 is specifically configured to transmit the open loop power control information to the terminal device through a radio resource control RRC message.

In an embodiment of the present application, the target open loop power control parameter includes at least one of the following parameters: an uplink target receiving power, a path loss factor, and a sounding reference signal SRS adjustment value.

In an embodiment of the present application, the uplink power control information includes power adjustment indication information, and the power adjustment indication information is used by the terminal device to determine, according to the power adjustment indication information and a preset corresponding relationship, a target close loop power adjustment value corresponding to the target uplink multiple access mode, where the preset corresponding relationship is a corresponding relationship between the power adjustment indication information and a close loop power adjustment value.

In an embodiment of the present application, the transceiving module 22 is specifically configured to transmit a downlink control signaling DCI to the terminal device, where the DCI includes the power adjustment indication information.

In an embodiment of the present application, the target close loop power adjustment value is an adjustment value of the target transmitting power relative to a first transmitting power, where the first transmitting power is a transmitting power that is used when the terminal device transmits an uplink signal having a same type as the target uplink signal at a previous time; or

the target close loop power adjustment value is an adjustment value of the target transmitting power relative to a second transmitting power, where the second transmitting power is a transmitting power that is used when the terminal device transmits an uplink signal having a same type as the target uplink signal using the target uplink multiple access mode at a previous time; or,

the target close loop power adjustment value is an adjustment value of the target transmitting power relative to a third transmitting power, where the third transmitting power is a transmitting power of an uplink signal that has a same type as the target uplink signal and is most recently determined by the terminal device; or,

the target close loop power adjustment value is an adjustment value of the target transmitting power relative to a fourth transmitting power, where the fourth transmitting power is a transmitting power of an uplink signal that is transmitted using the target uplink multiple access mode and has a same type as the target uplink signal and is most recently determined by the terminal device; or

the target close loop power adjustment value is an adjustment value of the target transmitting power relative to a fifth transmitting power, where the fifth transmitting power is a transmitting power of the target uplink signal that is determined by the terminal device according to an open loop power control parameter corresponding to the target uplink multiple access mode.

In an embodiment of the present application, the transceiving module 22 is further configured to receive the target uplink signal that is transmitted by the terminal device using the target uplink multiple access mode and the target transmitting power.

In an embodiment of the present application, the target uplink signal is one of the following signals: a physical uplink shared channel PUSCH, a physical uplink control channel PUCCH, an SRS, and a demodulation reference signal DMRS.

In an embodiment of the present application, the target uplink multiple access mode is one of the following multiple access modes: Discrete Fourier Transform Spread Orthogonal Frequency Division Multiplexing DFT-S-OFDM, Cyclic Prefix Orthogonal Frequency Division Multiplexing CP-OFDM, Single-carrier Frequency Division Multiple Access SC-FDMA, and Orthogonal Frequency Division Multiple Access OFDMA.

The network device according to the embodiment of the present application may correspond to processes corresponding to the method 200 in the embodiment of the present application, and respective units/modules in the network device and other operations and/or functions as described above are respectively intend to implement corresponding processes in the method 200. For the sake of brevity, details will not be described herein again.

FIG. 7 shows a terminal device according to another embodiment of the present application. As shown in FIG. 7, the terminal device 100 includes a processor 110 and a transceiver 120. The processor 110 is connected to the transceiver 120. In an embodiment, the terminal device 100 further includes a memory 130 connected to the processor 110. Where the processor 110, the memory 130, and the transceiver 120 may communicate with each other through an internal connection path. Where the transceiver 120 is configured to receive uplink power control information transmitted by a network device; and the processor 110 is configured to determine, according to the uplink power control information, a target power control parameter corresponding to a target uplink multiple access mode, and determine, according to the target power control parameter, a target transmitting power when transmitting a target uplink signal using the target uplink multiple access mode.

Hence, the terminal device according to the embodiment of the present application determines, according to received uplink power control information transmitted by a network device, a target power control parameter corresponding to a target uplink multiple access mode. Therefore, when the terminal device uses different uplink multiple access modes for performing uplink signal transmission, an independent uplink power control process may be used to determine an uplink transmitting power corresponding to the uplink multiple access mode. The uplink transmitting power can be flexibly adjusted to meet requirements from different uplink multiple access modes. The terminal device is applicable to a communication system supporting a plurality of uplink multiple access modes.

The terminal device 100 according to the embodiment of the present application may correspond the terminal device 10 in the corresponding embodiment of the present application, and respective units/modules in the terminal device and other operations and/or functions as described above are respectively intend to implement corresponding processes in the method 100. For the sake of brevity, details will not be described herein again.

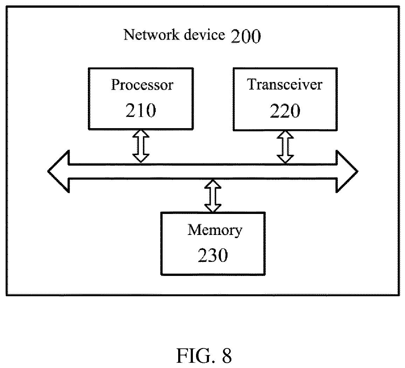

FIG. 8 shows a schematic block diagram of a network device according to another embodiment of the present application. As shown in FIG. 8, the network device 200 includes a processor 210 and a transceiver 220. The processor 210 is connected to the transceiver 220. In an embodiment, the network device 200 further includes a memory 230 connected to the processor 210. Where the processor 210, the memory 230, and the transceiver 220 may communicate with each other through an internal connection path. Where the processor 210 is configured to determine uplink power control information, and the uplink power control information is used by the terminal device to determine a target power control parameter corresponding to a target uplink multiple access mode, and determine, according to the target power control parameter, a target transmitting power when transmitting a target uplink signal using the target uplink multiple access mode; and the transceiver 220 is configured to transmit the uplink power control information to the terminal device.

Hence, the network device according to the embodiment of the present application transmits uplink power control information to a terminal device so that the terminal device can determine, according to the received uplink power control information, a target power control parameter corresponding to a target uplink multiple access mode. Therefore, when the terminal device uses different multiple access modes for performing uplink signal transmission, an independent uplink power control process may be used to determine an uplink transmitting power corresponding to the uplink multiple access mode. The uplink transmitting power can be flexibly adjusted to meet requirements from different uplink multiple access modes. The network device is applicable to a communication system supporting a plurality of uplink multiple access modes.

The network device 200 according to the embodiment of the present application may correspond to the network device 20 in the corresponding embodiment of the present application, and respective units/modules in the network device and other operations and/or functions as described above are respectively intend to implement corresponding processes in the method 200. For the sake of brevity, details will not be described herein again.

It can be understood that the processor in the embodiments of the present application may be an integrated circuit chip with signal processing capabilities. The above processor may be a general-purpose processor, a Digital Signal Processor (DSP), an Application Specific Integrated Circuit (ASIC), a Field Programmable Gate Array (FPGA) or other programmable logic devices, discrete gate or transistor logic devices, discrete hardware components. The methods, steps, and logical block diagrams disclosed in the embodiments of the present application may be implemented or performed. The general purpose processor may be a microprocessor or the processor may also be any conventional processor or the like.

The memory in the embodiments of the present application may be a volatile memory or a non-volatile memory, or may include both the volatile memory and the non-volatile memory. The non-volatile memory may be a Read-Only Memory (ROM), a Programmable Read-Only Memory (Programmable ROM, PROM), or an Erasable Programmable Read-Only Memory (Erasable PROM, EPROM), an Electrically Erasable Programmable Read-Only Memory (Electrically EPROM, EEPROM) or a flash memory. The volatile memory may be a Random Access Memory (RAM), which is used as an external cache. By way of exemplary but not restrictive illustration, many forms of RAMs may be available, such as a Static Random Access Memory (Static RAM, SRAM), a Dynamic Random Access Memory (Dynamic RAM, DRAM), a Synchronous Dynamic Random Access Memory (Synchronous DRAM, SDRAM), a Double Data Rate Synchronous Dynamic Random Access Memory (Double Data Rate SDRAM, DDR SDRAM), an Enhanced Synchronous Dynamic Random Access Memory (Enhanced SDRAM, ESDRAM), a Synchlink Dynamic Random Access Memory (Synchlink DRAM, SLDRAM) and a Direct Rambus Random Access Memory (Direct Rambus RAM, DR RAM). It should be noted that the memories of the systems and methods described herein are intended to include, but are not limited to these and any other suitable types of memories.

It may be known to persons of ordinary skill in the art that, the units and the algorithm steps of each example that are described with reference to the embodiments disclosed herein can be implemented by electronic hardware or a combination of computer software and electronic hardware. The situation whether these functions are performed by hardware or software depends on specific applications and design constraints of the technical solutions. Persons skilled in the art may implement the described functions by using different methods for each specific application, but such implementation should not be regarded as going beyond the scope of the present application.

It may be clearly understood by a person skilled in the art that, for the purpose of convenient and brief description, reference may be made to the corresponding processes in the foregoing method embodiments for specific working processes of the foregoing systems, apparatuses, and units, and details will not be described herein again.

In several embodiments provided in the present application, it should be understood that the disclosed systems, apparatuses, and methods may be implemented in other manners. For instance, the described apparatus embodiments are merely illustrative. For instance, the division of the units is merely a division of logical functions and there may be other divisions during actual implementations. For instance, multiple units or components may be combined or integrated into another system, or some features may be omitted or not be performed. In addition, mutual couplings or direct couplings or communication connections shown or discussed may be implemented through some interfaces. The indirect couplings or communication connections between the apparatuses or units may be implemented in electronic, mechanical, or other forms.

The units described as separate parts may or may not be physically separate, and parts shown as units may or may not be physical units, that is, may be located in one position, or may be distributed on multiple network units. A part or all of the units may be selected according to actual needs to achieve the objectives of the scheme in the present embodiments.

In addition, functional units in the embodiments of the present application may be integrated into one processing unit, or each of the units may exist alone physically, or two or more units are integrated into one unit.

If implemented in a form of a software functional unit and sold or used as an independent product, the functions may be stored in a computer-readable storage medium. Based on such understanding, the technical solutions of the present application essentially, or the part contributing to the prior art, or a part of the technical solutions may be implemented in a form of a software product. The computer software product is stored in a storage medium, and includes several instructions for enabling a computer device (which may be a personal computer, a server, or a network device, etc.) to perform all or a part of the steps of the methods described in each of the embodiments of the present application. The foregoing storage medium includes: any medium that can store program codes, such as a USB flash disk, a mobile hard disk, a Read-Only Memory (ROM), a Random Access Memory (RAM), a magnetic disk, or an optical disc, etc.

The above descriptions are merely specific embodiments of the present application; however, the protection scope of the present application is not limited thereto. Any modification or replacement that may be readily envisaged of by persons skilled in the art within the technical scope disclosed in the present application should fall into the protection scope of the present application. Thus, the protection scope of the present application shall be subject to the protection scope of the claims.

**Claims**

1. A method for controlling uplink power, comprising:

    receiving (S110), by a terminal device, uplink power control information transmitted by a network device;
    determining (S120), by the terminal device, according to the uplink power control information, a target power control parameter corresponding to a target uplink multiple access mode; and
    determining (S130), by the terminal device, according to the target power control parameter, a target transmitting power when transmitting a target uplink signal using the target uplink multiple access mode;
    **characterized in that**:

        wherein the uplink power control information comprises open loop power control information, the open loop power control information comprises open loop power control parameters corresponding to a plurality of uplink multiple access modes, and the plurality of uplink multiple access modes comprises the target uplink multiple access mode;
        wherein the determining (S120), by the terminal device, according to the uplink power control information, a target power control parameter corresponding to a target uplink multiple access mode of a plurality of uplink multiple access modes comprises:
        determining, by the terminal device, according to the open loop power control information, a target open loop power control parameter corresponding to the target uplink multiple access mode in the open loop power control parameters, wherein the target open loop power control parameter comprises the following parameters: an uplink target receiving power, a path loss factor, and a sounding reference signal, SRS, power adjustment value.

2. The method according to claim 1, wherein the uplink power control information comprises power adjustment indication information;
    where the determining, by the terminal device, according to the uplink power control information, a target power control parameter corresponding to a target uplink multiple access mode comprises:
    determining, by the terminal device, according to the power adjustment indication information and a preset corresponding relationship, a target close loop power adjustment value corresponding to the target uplink multiple access mode, wherein the preset corresponding relationship is a corresponding relationship between the power adjustment indication information and a close loop power adjustment value.

3. The method according to claim 2, wherein the determining, by the terminal device, according to the power adjustment indication information and a preset corresponding relationship, a target close loop power adjustment value corresponding to the target uplink multiple access mode comprises:

    determining, by the terminal device, according to the target uplink multiple access mode, a target corresponding relationship from the preset corresponding relationship; and
determining, by the terminal device, according to the power adjustment indication information and the target corresponding relationship, the target close loop power adjustment value.

4. The method according to any one of claims 2 to 3, wherein the target close loop power adjustment value is an adjustment value of the target transmitting power relative to a first transmitting power, wherein the first transmitting power is a transmitting power that is used when the terminal device transmits an uplink signal having a same type as the target uplink signal at a previous time.

5. The method according to any one of claims 2 to 3, wherein the target close loop power adjustment value is an adjustment value of the target transmitting power relative to a second transmitting power, wherein the second transmitting power is a transmitting power that is used when the terminal device transmits an uplink signal having a same type as the target uplink signal using the target uplink multiple access mode at a previous time.

6. The method according to any one of claims 2 to 3, wherein the target close loop power adjustment value is an adjustment value of the target transmitting power relative to a third transmitting power, wherein the third transmitting power is a transmitting power of an uplink signal that has a same type as the target uplink signal and is most recently determined by the terminal device.

7. The method according to any one of claims 2 to 3, wherein the target close loop power adjustment value is an adjustment value of the target transmitting power relative to a fourth transmitting power, wherein the fourth transmitting power is a transmitting power of an uplink signal that is transmitted using the target uplink multiple access mode and has a same type as the target uplink signal and is most recently determined by the terminal device.

8. The method according to any one of claims 2 to 3, wherein the target close loop power adjustment value is an adjustment value of the target transmitting power relative to a fifth transmitting power, wherein the fifth transmitting power is a transmitting power of the target uplink signal that is determined by the terminal device according to an open loop power control parameter corresponding to the target uplink multiple access mode.

9. The method according to any one of claims 1 to 8, wherein the target uplink multiple access mode is one of the following multiple access modes: Discrete Fourier Transform Spread Orthogonal Frequency Division Multiplexing, DFT-S-OFDM, Cyclic Prefix Orthogonal Frequency Division Multiplexing, CP-OFDM, Single-carrier Frequency Division Multiple Access, SC-FDMA, and Orthogonal Frequency Division Multiple Access, OFDMA.

10. A terminal device, comprising:

a transceiving module (11), configured to receive uplink power control information transmitted by a network device; and
a processing module (12), configured to determine, according to the uplink power control information, a target power control parameter corresponding to a target uplink multiple access mode;
the processing module (12) is further configured to determine, according to the target power control parameter, a target transmitting power when transmitting a target uplink signal using the target uplink multiple access mode; **characterized in that**:

wherein the uplink power control information comprises open loop power control information, the open loop power control information comprises open loop power control parameters corresponding to a plurality of uplink multiple access modes, and the plurality of uplink multiple access modes comprises the target uplink multiple access mode;
wherein the processing module (12) is specifically configured to determine, according to the open loop power control information, a target open loop power control parameter corresponding to the target uplink multiple access mode in the open loop power control parameters, wherein the target open loop power control parameter comprises the following parameters: an uplink target receiving power, a path loss factor, and a sounding reference signal, SRS, power adjustment value.

11. The terminal device according to claim 10, wherein the uplink power control information comprises power adjustment indication information;
the processing module (12) is specifically configured to determine, according to the power adjustment indication information and a preset corresponding relationship, a target close loop power adjustment value corresponding to the target uplink multiple access mode, wherein the preset corresponding relationship is a corresponding relationship between the power adjustment indication information and a close loop power adjustment value.

12. The terminal device according to claim 11, wherein the processing module (12) is specifically configured to: determine, according to the target uplink multiple access mode, a target corresponding relationship from the preset corresponding relationship; and

determine, according to the power adjustment indication information and the target corresponding relationship, the target close loop power adjustment value.

13. The terminal device according to any one of claims 10 to 12, wherein the target uplink multiple access mode is one of the following multiple access modes: Discrete Fourier Transform Spread Orthogonal Frequency Division Multiplexing, DFT-S-OFDM, Cyclic Prefix Orthogonal Frequency Division Multiplexing, CP-OFDM, Single-carrier Frequency Division Multiple Access, SC-FDMA, and Orthogonal Frequency Division Multiple Access, OFDMA.

14. A network device, comprising:

a processing module (21), configured to: determine uplink power control information, wherein the uplink power control information is used by the terminal device to determine a target power control parameter corresponding to a target uplink multiple access mode, and determine, according to the target power control parameter, a target transmitting power when transmitting a target uplink signal using the target uplink multiple access mode; and

a transceiving module (22), configured to transmit the uplink power control information to the terminal device; **characterized in that**:

wherein the uplink power control information comprises open loop power control information, the open loop power control information comprises open loop power control parameters corresponding to a plurality of uplink multiple access modes, the plurality of uplink multiple access modes comprise the target uplink multiple access mode, and the open loop power control information is used by the terminal device to determine a target open loop power control parameter corresponding to the target uplink multiple access mode in the open loop power control parameters, wherein the target open loop power control parameter comprises the following parameters: an uplink target receiving power, a path loss factor, and a sounding reference signal, SRS, adjustment value.

**Patentansprüche**

1. Verfahren zum Regeln der Uplink-Leistung, umfassend:

Empfangen (S110), durch eine Endgerätevorrichtung, von Uplink-Leistungsregelungsinformationen, die durch eine Netzvorrichtung übertragen werden;

Bestimmen (S120), durch die Endgerätevorrichtung, gemäß den Uplink-Leistungsregelungsinformationen, eines Zielleistungsregelungsparameters, der einem Ziel-Uplink-Mehrfachzugriffmodus entspricht; und

Bestimmen (S130), durch die Endgerätevorrichtung, gemäß dem Zielleistungsregelungsparameter, einer Zielsendeleistung, wenn ein Ziel-Uplink-Signal unter Verwendung des Ziel-Uplink-Mehrfachzugriffmodus übertragen wird;

**gekennzeichnet durch**:

wobei die Uplink-Leistungsregelungsinformationen Informationen zur Leistungsregelung mit offener Schleife umfassen, die Informationen zur Leistungsregelung mit offener Schleife Parameter der Leistungsregelung mit offener Schleife umfassen, die mehreren Uplink-Mehrfachzugriffmodi entsprechen, und die mehreren Uplink-Mehrfachzugriffmodi den Ziel-Uplink-Mehrfachzugriffmodus umfassen;

wobei das Bestimmen (S120), durch die Endgerätevorrichtung, gemäß den Uplink-Leistungsregelungsinformationen, eines Zielleistungsregelungsparameters, der einem Ziel-Uplink-Mehrfachzugriffmodus mehrerer Uplink-Mehrfachzugriffmodi entspricht, Folgendes umfasst:

Bestimmen, durch die Endgerätevorrichtung, gemäß den Informationen zur Leistungsregelung mit offener Schleife, eines Zielparameters der Leistungsregelung mit offener Schleife, der dem Ziel-Uplink-Mehrfachzugriffmodus entspricht, in den Parametern der Leistungsregelung mit offener Schleife, wobei der Zielparameter der Leistungsregelung mit offener Schleife die folgenden Parameter umfasst: eine Uplink-Zielempfangsleistung, einen Pfadverlustfaktor und einen Sondierungsreferenzsignal- bzw. SRS-Leistungsanpassungswert.

2. Verfahren nach Anspruch 1, wobei die Uplink-Leistungsregelungsinformationen Leistungsanpassungsindikationsinformationen umfassen;
wobei das Bestimmen, durch die Endgerätevorrichtung, gemäß den Uplink-Leistungsregelungsinformationen, eines Zielleistungsregelungsparameters, der einem Ziel-Uplink-Mehrfachzugriffmodus entspricht, Folgendes umfasst:
Bestimmen, durch die Endgerätevorrichtung, gemäß den Leistungsanpassungsindikationsinformationen und einer voreingestellten Entsprechungsbeziehung, eines Zielanpassungswerts der Leistung mit geschlossener Schleife, der dem Ziel-Uplink-Mehrfachzugriffmodus entspricht, wobei die voreingestellte Entsprechungsbeziehung eine Entsprechungsbeziehung zwischen den Leistungsanpassungsindikationsinformationen und einem Anpassungswert der Leistung mit geschlossener Schleife ist.

3. Verfahren nach Anspruch 2, wobei das Bestimmen, durch die Endgerätevorrichtung, gemäß den Leistungsanpassungsindikationsinformationen und einer voreingestellten Entsprechungsbeziehung, eines Zielanpassungswerts der Leistung mit geschlossener Schleife, der dem Ziel-Uplink-Mehrfachzugriffmodus entspricht, Folgendes umfasst:

Bestimmen, durch die Endgerätevorrichtung, gemäß dem Ziel-Uplink-Mehrfachzugriffmodus, einer Zielentsprechungsbeziehung aus der voreingestellten Entsprechungsbeziehung; und
Bestimmen, durch die Endgerätevorrichtung, gemäß den Leistungsanpassungsindikationsinformationen und der Zielentsprechungsbeziehung, des Zielanpassungswerts der Leistung mit geschlossener Schleife.

4. Verfahren nach einem der Ansprüche 2 bis 3, wobei der Zielanpassungswert der Leistung mit geschlossener Schleife ein Anpassungswert der Zielsendeleistung bezüglich einer ersten Sendeleistung ist, wobei die erste Sendeleistung eine Sendeleistung ist, die verwendet wird, wenn die Endgerätevorrichtung ein Uplink-Signal mit demselben Typ wie das Ziel-Uplink-Signal zu einer vorherigen Zeit überträgt.

5. Verfahren nach einem der Ansprüche 2 bis 3, wobei der Zielanpassungswert der Leistung mit geschlossener Schleife ein Anpassungswert der Zielsendeleistung bezüglich einer zweiten Sendeleistung ist, wobei die zweite Sendeleistung eine Sendeleistung ist, die verwendet wird, wenn die Endgerätevorrichtung ein Uplink-Signal mit demselben Typ wie das Ziel-Uplink-Signal unter Verwendung des Ziel-Uplink-Mehrfachzugriffmodus zu einer vorherigen Zeit überträgt.

6. Verfahren nach einem der Ansprüche 2 bis 3, wobei der Zielanpassungswert der Leistung mit geschlossener Schleife ein Anpassungswert der Zielsendeleistung bezüglich einer dritten Sendeleistung ist, wobei die dritte Sendeleistung eine Sendeleistung eines Uplink-Signals ist, das denselben Typ wie das Ziel-Uplink-Signal aufweist und zuletzt durch die Endgerätevorrichtung bestimmt wurde.

7. Verfahren nach einem der Ansprüche 2 bis 3, wobei der Zielanpassungswert der Leistung mit geschlossener Schleife ein Anpassungswert der Zielsendeleistung bezüglich einer vierten Sendeleistung ist, wobei die vierte Sendeleistung eine Sendeleistung eines Uplink-Signals ist, das unter Verwendung des Ziel-Uplink-Mehrfachzugriffmodus übertragen wird und denselben Typ wie das Ziel-Uplink-Signal aufweist und zuletzt durch die Endgerätevorrichtung bestimmt wurde.

8. Verfahren nach einem der Ansprüche 2 bis 3, wobei der Zielanpassungswert der Leistung mit geschlossener Schleife ein Anpassungswert der Zielsendeleistung bezüglich einer fünften Sendeleistung ist, wobei die fünfte Sendeleistung eine Sendeleistung des Ziel-Uplink-Signals ist, das durch die Endgerätevorrichtung gemäß einem Parameter der Leistungsregelung mit offener Schleife, der dem Ziel-Uplink-Mehrfachzugriffmodus entspricht, bestimmt wird.

9. Verfahren nach einem der Ansprüche 1 bis 8, wobei der Ziel-Uplink-Mehrfachzugriffmodus einer der folgenden Mehrfachzugriffmodi ist: Discrete Fourier Transform Spread Orthogonal Frequency Division Multiplexing, DFT-S-OFDM (Orthogonal-Frequenzmultiplexing mit diskreter FourierTransformation-Spreizung), Cyclic Prefix Orthogonal Frequency Division Multiplexing, CP-OFDM (Orthogonal-Frequenzmultiplexing mit zyklischem Präfix), Single-Carrier Frequency Division Multiple Access, SC-FDMA (Einzelträger-Frequenzmultiplex-Mehrfachzugriff), und Orthogonal Frequency Division Multiple Access, OFDMA (Orthogonal-Frequenzmultiplex-Mehrfachzugriff).

10. Endgerätevorrichtung, umfassend:

ein Sendeempfangsmodul (11), das ausgelegt ist zum Empfangen von Uplink-Leistungsregelungsinformationen, die durch eine Netzvorrichtung übertragen werden; und
ein Verarbeitungsmodul (12), das ausgelegt ist zum Bestimmen, gemäß den Uplink-Leistungsregelungsinformationen, eines Zielleistungsregelungsparameters, der einem Ziel-Uplink-Mehrfachzugriffmodus entspricht; wobei das Verarbeitungsmodul (12) ferner ausgelegt ist zum Bestimmen, gemäß dem Zielleistungsregelungsparameter, einer Zielsendeleistung, wenn ein Ziel-Uplink-Signal unter Verwendung des Ziel-Uplink-Mehrfachzugriffmodus übertragen wird;

**gekennzeichnet durch**:

wobei die Uplink-Leistungsregelungsinformationen Informationen zur Leistungsregelung mit offener Schleife umfassen, die Informationen zur Leistungsregelung mit offener Schleife Parameter der Leistungsregelung mit offener Schleife umfassen, die mehreren Uplink-Mehrfachzugriffmodi entsprechen, und die mehreren Uplink-Mehrfachzugriffmodi den Ziel-Uplink-Mehrfachzugriffmodus umfassen; wobei das Verarbeitungsmodul (12) spezifisch ausgelegt ist zum Bestimmen, gemäß den Informationen zur Leistungsregelung mit offener Schleife, eines Zielparameters der Leistungsregelung mit offener Schleife, der dem Ziel-Uplink-Mehrfachzugriffmodus entspricht, in den Parametern der Leistungsregelung mit offener Schleife, wobei der Zielparameter der Leistungsregelung mit offener Schleife die folgenden Parameter umfasst: eine Uplink-Zielempfangsleistung, einen Pfadverlustfaktor und einen Sondierungsreferenzsignal- bzw. SRS-Leistungsanpassungswert.

11. Endgerätevorrichtung nach Anspruch 10, wobei die Uplink-Leistungsregelungsinformationen Leistungsanpassungsindikationsinformationen umfassen;

wobei das Verarbeitungsmodul (12) spezifisch ausgelegt ist zum Bestimmen, gemäß den Leistungsanpassungsindikationsinformationen und einer voreingestellten Entsprechungsbeziehung, eines Zielanpassungswerts der Leistung mit geschlossener Schleife, der dem Ziel-Uplink-Mehrfachzugriffmodus entspricht, wobei die voreingestellte Entsprechungsbeziehung eine Entsprechungsbeziehung zwischen den Leistungsanpassungsindikationsinformationen und einem Anpassungswert der Leistung mit geschlossener Schleife ist.

12. Endgerätevorrichtung nach Anspruch 11, wobei das Verarbeitungsmodul (12) spezifisch ausgelegt ist zum: Bestimmen, gemäß dem Ziel-Uplink-Mehrfachzugriffmodus, einer Zielentsprechungsbeziehung aus der voreingestellten Entsprechungsbeziehung; und Bestimmen, gemäß den Leistungsanpassungsindikationsinformationen und der Zielentsprechungsbeziehung, des Zielanpassungswerts der Leistung mit geschlossener Schleife.

13. Endgerätevorrichtung nach einem der Ansprüche 10 bis 12, wobei der Ziel-Uplink-Mehrfachzugriffmodus einer der folgenden Mehrfachzugriffmodi ist:
Discrete Fourier Transform Spread Orthogonal Frequency Division Multiplexing, DFT-S-OFDM, Cyclic Prefix Orthogonal Frequency Division Multiplexing, CP-OFDM, Single-Carrier Frequency Division Multiple Access, SC-FDMA, und Orthogonal Frequency Division Multiple Access, OFDMA.

14. Netzvorrichtung, umfassend:

ein Verarbeitungsmodul (21), das ausgelegt ist zum: Bestimmen von Uplink-Leistungsregelungsinformationen, wobei die Uplink-Leistungsregelungsinformationen durch die Endgerätevorrichtung verwendet werden, um einen Zielleistungsregelungsparameter zu bestimmen, der einem Ziel-Uplink-Mehrfachzugriffmodus entspricht, und Bestimmen, gemäß dem Zielleistungsregelungsparameter, einer Zielsendeleistung, wenn ein Ziel-Uplink-Signal unter Verwendung des Ziel-Uplink-Mehrfachzugriffmodus übertragen wird; und ein Sendeempfangsmodul (22), das ausgelegt ist zum Übertragen der Uplink-Leistungsregelungsinformationen zu der Endgerätevorrichtung;

**gekennzeichnet durch**:
wobei die Uplink-Leistungsregelungsinformationen Informationen zur Leistungsregelung mit offener Schleife umfassen, die Informationen zur Leistungsregelung mit offener Schleife Parameter der Leistungsregelung mit offener Schleife umfassen, die mehreren Uplink-Mehrfachzugriffmodi entsprechen, die mehreren Uplink-Mehrfachzugriffmodi den Ziel-Uplink-Mehrfachzugriffmodus umfassen, und die Informationen zur Leistungsregelung mit offener Schleife durch die Endgerätevorrichtung verwendet werden, um einen Zielparameter der Leistungsregelung mit offener Schleife, der dem Ziel-Uplink-Mehrfachzugriffmodus entspricht, in den Parametern der Leistungsregelung mit offener Schleife zu bestimmen, wobei der Zielparameter der Leistungsregelung mit offener Schleife die folgenden Parameter umfasst: eine Uplink-Zielempfangsleistung, einen Pfadverlustfaktor und einen Sondierungsreferenzsignal- bzw. SRS-Leistungsanpassungswert.

**Revendications**

1. Procédé de commande de puissance de liaison montante, comportant :

   la réception (S110), par un dispositif terminal, d'informations de commande de puissance de liaison montante émises par un dispositif de réseau ;
   la détermination (S120), par le dispositif terminal, d'après les informations de commande de puissance de liaison montante, d'un paramètre cible de commande de puissance correspondant à un mode cible d'accès multiple en liaison montante ; et
   la détermination (S130), par le dispositif terminal, d'après le paramètre cible de commande de puissance, d'une puissance cible d'émission lors de l'émission d'un signal cible de liaison montante à l'aide du mode cible d'accès multiple en liaison montante ;
   **caractérisé en ce que** :

   les informations de commande de puissance de liaison montante comportent des informations de commande de puissance en boucle ouverte, les informations de commande de puissance en boucle ouverte comportent des paramètres de commande de puissance en boucle ouverte correspondant à une pluralité de modes d'accès multiple en liaison montante, et la pluralité de modes d'accès multiple en liaison montante comporte le mode cible d'accès multiple en liaison montante ;
   la détermination (S120), par le dispositif terminal, d'après les informations de commande de puissance de liaison montante, d'un paramètre cible de commande de puissance correspondant à un mode cible d'accès multiple en liaison montante parmi une pluralité de modes d'accès multiple en liaison montante comportant :
   la détermination, par le dispositif terminal, d'après les informations de commande de puissance en boucle ouverte, d'un paramètre cible de commande de puissance en boucle ouverte correspondant au mode cible d'accès multiple en liaison montante parmi les paramètres de commande de puissance en boucle ouverte, le paramètre cible de commande de puissance en boucle ouverte comportant les paramètres suivants : une puissance cible de réception en liaison montante, un facteur d'affaiblissement sur le trajet, et une valeur d'ajustement de puissance de signaux de référence de sondage, SRS.

2. Procédé selon la revendication 1, les informations de commande de puissance de liaison montante comportant des informations d'indication d'ajustement de puissance ;
   la détermination, par le dispositif terminal, d'après les informations de commande de puissance de liaison montante, d'un paramètre cible de commande de puissance correspondant à un mode cible d'accès multiple en liaison montante comportant :
   la détermination, par le dispositif terminal, d'après les informations d'indication d'ajustement de puissance et une relation de correspondance préétablie, d'une valeur cible d'ajustement de puissance en boucle fermée correspondant au mode cible d'accès multiple en liaison montante, la relation de correspondance préétablie étant une relation de correspondance entre les informations d'indication d'ajustement de puissance et une valeur d'ajustement de puissance en boucle fermée.

3. Procédé selon la revendication 2, la détermination, par le dispositif terminal, d'après les informations d'indication d'ajustement de puissance et une relation de correspondance préétablie, d'une valeur cible d'ajustement de puissance en boucle fermée correspondant au mode cible d'accès multiple en liaison montante comportant :

   la détermination, par le dispositif terminal, d'après le mode cible d'accès multiple en liaison montante, d'une relation cible de correspondance à partir de la relation de correspondance préétablie ; et
   la détermination, par le dispositif terminal, d'après les informations d'indication d'ajustement de puissance et la relation cible de correspondance, de la valeur cible d'ajustement de puissance en boucle fermée.

4. Procédé selon l'une quelconque des revendications 2 à 3, la valeur cible d'ajustement de puissance en boucle fermée étant une valeur d'ajustement de la puissance cible d'émission par rapport à une première puissance d'émission, la première puissance d'émission étant une puissance d'émission qui est utilisée lorsque le dispositif terminal émet un signal de liaison montante de même type que le signal cible de liaison montante à un instant précédent.

5. Procédé selon l'une quelconque des revendications 2 à 3, la valeur cible d'ajustement de puissance en boucle fermée étant une valeur d'ajustement de la puissance cible d'émission par rapport à une deuxième puissance d'émission, la deuxième puissance d'émission étant une puissance d'émission qui est utilisée lorsque le dispositif terminal émet un signal de liaison montante de même type que le signal cible de liaison montante à l'aide du mode cible d'accès multiple en liaison montante à un instant précédent.

**6.** Procédé selon l'une quelconque des revendications 2 à 3, la valeur cible d'ajustement de puissance en boucle fermée étant une valeur d'ajustement de la puissance cible d'émission par rapport à une troisième puissance d'émission, la troisième puissance d'émission étant une puissance d'émission d'un signal de liaison montante de même type que le signal cible de liaison montante et étant déterminée le plus récemment par le dispositif terminal.

**7.** Procédé selon l'une quelconque des revendications 2 à 3, la valeur cible d'ajustement de puissance en boucle fermée étant une valeur d'ajustement de la puissance cible d'émission par rapport à une quatrième puissance d'émission, la quatrième puissance d'émission étant une puissance d'émission d'un signal de liaison montante qui est émis à l'aide du mode cible d'accès multiple en liaison montante et est de même type que le signal cible de liaison montante et étant déterminée le plus récemment par le dispositif terminal.

**8.** Procédé selon l'une quelconque des revendications 2 à 3, la valeur cible d'ajustement de puissance en boucle fermée étant une valeur d'ajustement de la puissance cible d'émission par rapport à une cinquième puissance d'émission, la cinquième puissance d'émission étant une puissance d'émission du signal cible de liaison montante qui est déterminée par le dispositif terminal d'après un paramètre de commande de puissance en boucle ouverte correspondant au mode cible d'accès multiple en liaison montante.

**9.** Procédé selon l'une quelconque des revendications 1 à 8, le mode cible d'accès multiple en liaison montante étant un des modes d'accès multiple suivants :
multiplexage par répartition orthogonale en fréquence avec étalement de transformée de Fourier discrète, DFT-S-OFDM, multiplexage par répartition orthogonale en fréquence avec préfixe cyclique, CP-OFDM, accès multiple par répartition en fréquence à porteuse unique, SC-FDMA, et accès multiple par répartition orthogonale en fréquence, OFDMA.

**10.** Dispositif terminal, comportant :

un module (11) d'émission-réception, configuré pour recevoir des informations de commande de puissance de liaison montante émises par un dispositif de réseau ; et
un module (12) de traitement, configuré pour déterminer, d'après les informations de commande de puissance de liaison montante, un paramètre cible de commande de puissance correspondant à un mode cible d'accès multiple en liaison montante ;
le module (12) de traitement étant en outre configuré pour déterminer, d'après le paramètre cible de commande de puissance, une puissance cible d'émission lors de l'émission d'un signal cible de liaison montante à l'aide du mode cible d'accès multiple en liaison montante ;
**caractérisé en ce que** :

les informations de commande de puissance de liaison montante comportent des informations de commande de puissance en boucle ouverte, les informations de commande de puissance en boucle ouverte comportent des paramètres de commande de puissance en boucle ouverte correspondant à une pluralité de modes d'accès multiple en liaison montante, et la pluralité de modes d'accès multiple en liaison montante comporte le mode cible d'accès multiple en liaison montante ;
le module (12) de traitement étant spécifiquement configuré pour déterminer, d'après les informations de commande de puissance en boucle ouverte, un paramètre cible de commande de puissance en boucle ouverte correspondant au mode cible d'accès multiple en liaison montante parmi les paramètres de commande de puissance en boucle ouverte, le paramètre cible de commande de puissance en boucle ouverte comportant les paramètres suivants : une puissance cible de réception en liaison montante, un facteur d'affaiblissement sur le trajet, et une valeur d'ajustement de puissance de signaux de référence de sondage, SRS.

**11.** Dispositif terminal selon la revendication 10, les informations de commande de puissance de liaison montante comportant des informations d'indication d'ajustement de puissance ;
le module (12) de traitement étant spécifiquement configuré pour déterminer, d'après les informations d'indication d'ajustement de puissance et une relation de correspondance préétablie, une valeur cible d'ajustement de puissance en boucle fermée correspondant au mode cible d'accès multiple en liaison montante, la relation de correspondance préétablie étant une relation de correspondance entre les informations d'indication d'ajustement de puissance et une valeur d'ajustement de puissance en boucle fermée.

**12.** Dispositif terminal selon la revendication 11, le module (12) de traitement étant spécifiquement configuré pour :

déterminer, d'après le mode cible d'accès multiple en liaison montante, une relation cible de correspondance à partir de la relation de correspondance préétablie ; et

déterminer, d'après les informations d'indication d'ajustement de puissance et la relation cible de correspondance, la valeur cible d'ajustement de puissance en boucle fermée.

**13.** Dispositif terminal selon l'une quelconque des revendications 10 à 12, le mode cible d'accès multiple en liaison montante étant un des modes d'accès multiple suivants : multiplexage par répartition orthogonale en fréquence avec étalement de transformée de Fourier discrète, DFT-S-OFDM, multiplexage par répartition orthogonale en fréquence avec préfixe cyclique, CP-OFDM, accès multiple par répartition en fréquence à porteuse unique, SC-FDMA, et accès multiple par répartition orthogonale en fréquence, OFDMA.

**14.** Dispositif de réseau, comportant :
un module (21) de traitement, configuré pour :

déterminer des informations de commande de puissance de liaison montante, les informations de commande de puissance de liaison montante étant utilisées par le dispositif terminal pour déterminer un paramètre cible de commande de puissance correspondant à un mode cible d'accès multiple en liaison montante, et déterminer, d'après le paramètre cible de commande de puissance, une puissance cible d'émission lors de l'émission d'un signal cible de liaison montante à l'aide du mode cible d'accès multiple en liaison montante ; et

un module (22) d'émission-réception, configuré pour émettre les informations de commande de puissance de liaison montante vers le dispositif terminal ;

**caractérisé en ce que** :

les informations de commande de puissance de liaison montante comportent des informations de commande de puissance en boucle ouverte, les informations de commande de puissance en boucle ouverte comportent des paramètres de commande de puissance en boucle ouverte correspondant à une pluralité de modes d'accès multiple en liaison montante, la pluralité de modes d'accès multiple en liaison montante comporte le mode cible d'accès multiple en liaison montante, et les informations de commande de puissance en boucle ouverte sont utilisées par le dispositif terminal pour déterminer un paramètre cible de commande de puissance en boucle ouverte correspondant au mode cible d'accès multiple en liaison montante parmi les paramètres de commande de puissance en boucle ouverte, le paramètre cible de commande de puissance en boucle ouverte comportant les paramètres suivants : une puissance cible de réception en liaison montante, un facteur d'affaiblissement sur le trajet, et une valeur d'ajustement de signaux de référence de sondage, SRS.

<u>100</u>

| A terminal device receives uplink power control information transmitted by a network device | S110 |
| The terminal device determines, according to the uplink power control information, a target power control parameter corresponding to a target uplink multiple access mode | S120 |
| The terminal device determines, according to the target power control parameter, a target transmitting power when transmitting a target uplink signal using the target uplink multiple access mode | S130 |

FIG. 1

<u>100</u>

| A terminal device receives uplink power control information transmitted by a network device | S110 |
| The terminal device determines, according to the uplink power control information, a target power control parameter corresponding to a target uplink multiple access mode | S120 |
| The terminal device determines, according to the target power control parameter, a target transmitting power when transmitting a target uplink signal using the target uplink multiple access mode | S130 |
| The terminal device transmits the target uplink signal to the network device by using the target uplink multiple access mode and the target transmitting power | S140 |

FIG. 2

200

| A network device determines uplink power control information, where the uplink power control information is used by the terminal device to determine a target power control parameter corresponding to a target uplink multiple access mode, and determine, according to the target power control parameter, a target transmitting power when transmitting a target uplink signal using the target uplink multiple access mode | S210 |
|---|---|

| The network device transmits the uplink power control information to the terminal device | S220 |
|---|---|

FIG. 3

200

| A network device determines uplink power control information, where the uplink power control information is used by the terminal device to determine a target power control parameter corresponding to a target uplink multiple access mode, and determine, according to the target power control parameter, a target transmitting power when transmitting a target uplink signal using the target uplink multiple access mode | S210 |
|---|---|

| The network device transmits the uplink power control information to the terminal device | S220 |
|---|---|

| The network device receives the target uplink signal that is transmitted by the terminal device using the target uplink multiple access mode and the target transmitting power | S230 |
|---|---|

FIG. 4

Terminal device 10

Transceiving module 11

Processing module 12

FIG. 5

Network device 20

Processing module 21

Transceiving module 22

FIG. 6

Terminal device 100

Processor 110

Transceiver 120

Memory 130

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010142455 A1